# EUROPEAN PATENT SPECIFICATION

(11) **EP 1 419 847 B1**
(45) Date of publication and mention of the grant of the patent: **17.06.2015**
(21) Application number: 03256536.8
(22) Date of filing: 16.10.2003
(51) Int. Cl.: B23K 26/38

(54) **Laser drilling shaped holes**
Laserbohren von profilierten Löchern
Perçage au laser de trous profilés

(30) Priority: 15.11.2002 GB 0226689
(43) Date of publication of application: 19.05.2004
(73) Proprietor: ROLLS-ROYCE PLC, London, SW1E 6AT (GB)
(72) Inventor: Stevens, Martin John, Bristol BS5 8PN (GB)
(74) Representative: Roberts, Nicholas John

(56) References cited:
- US-A- 5 609 779
- US-B1- 6 307 175

## Description

This invention relates to a method of laser trepan drilling diffusor type holes according to the preamble of claim 1, and in particular concerns a method of laser drilling diffuser type cooling holes in a gas turbine engine component such as a nozzle guide vane. US 6 307 175 B1 discloses such a method.

Cooling holes are produced in nozzle guide vanes (NGV's) using both laser and electrical discharge machining (EDM) methods. Cooling holes are formed in the airfoil wall sections of an NGV to enable cooling air bled from the engine compressor, for example, to pass from the hollow core of the NGV to form a thin film of cooling air over the airfoil surface, thereby protecting the airfoil from the effects of high temperature combustion gases. Film cooling is necessary to prevent the combustion gases, which may exceed 1600°C in modern high performance engines, from melting the NGV's at the turbine inlet. A secondary effect of the introduction of film cooling air is to dilute the combustion gases and thereby reduce the mean temperature of the gases exiting the NGV's so that the turbine rotor blades downstream of the NGV's operate in a less hostile (ie lower temperature) environment.

The shape and size of cooling holes varies considerably depending on the shape and size of the component to be cooled and the amount of cooling air required in a specific area of the airfoil. The geometric shape of cooling holes includes cylindrical holes and shaped holes. Cylindrical holes typically comprise a constant area circular cross-section passing through the wall of the airfoil. These holes are relatively easy to produce using known EDM and laser technologies. Shaped holes, on the other hand are more difficult to produce and typically comprise a constant cross-section metering section for controlling the amount of cooling air flowing through the hole, and a downstream diffuser section opening onto the exterior surface of the airfoil. The purpose of the diffuser is to reduce the flow velocity of the cooling air as it passes through the hole so that it can readily form a thin film over the surface of the airfoil when exiting the hole. Shaped cooling hole geometries include race track holes, two or three into one, conical diffuser holes and two dimensional Y-shaped "plain fan" or "EDM fan" type holes. For the purpose of this description the term "EDM fan" refers to a shaped diffuser type cooling hole having a generally cylindrical upstream metering section which opens to a generally two dimensional fan shaped diffuser section such that the hole has an overall Y-shaped configuration. The "EDM fan", or term "plain fan" which is used interchangeably herein, is used to describe this type of cooling because hitherto it has only been possible to produce this geometry by EDM drilling.

A current production method for generating EDM or plain fan cooling holes in NGV's involves the oscillation of a set of EDM electrodes to erode (by spark erosion) the component material. The amplitude of the oscillation is reduced as the depth of the hole increases so that an angled fan is generated. When the electrode reaches the transition point between the fan and the metering section oscillation of the electrode ceases and a constant cross-section cylindrical hole is produced. The cylindrical hole has a cross-section determined by the geometry of the electrode.

There are a number of disadvantages associated with the use of EDM methods to drill diffuser type cooling holes. For example, the cost of EDM tooling can be expensive, particularly since a separate tool is required for each row of cooling holes to be drilled. The shape, size and distribution of the holes in each row is usually different to that of other rows and therefore the same EDM tooling cannot be used for different rows. In addition, the cost of the consumable brass or tungsten electrodes can be significant since twenty five or so may be used for a particular row of holes and these may need replacing after they have been used for drilling only a few components. The EDM drilling process is also relatively slow when compared with, say, laser drilling. There is a general requirement therefore to decrease the time it takes to drill a hole particularly since components such as NGV's comprise many tens or hundreds of shaped holes. Another disadvantage of the EDM drilling process is that it only provides for cylindrical type holes at the opening into the interior plenum of the NGV. In some applications there is a requirement to produce a fan type structure at the opening on the interior surface of the wall into the interior plenum of the NGV.

Various earlier published patents describe methods for drilling shaped cooling holes by laser and a combination of laser and EDM drilling steps. For example, US-A-4,808,785 discloses a two step process including a first step of laser drilling a constant cross-section hole through the wall section of an NGV airfoil and subsequently performing an EDM step to form the diffuser shaped part of the hole. This method has the disadvantage that it requires a highly accurate positioning system to ensure correct positioning of the work piece with respect to the laser drilling apparatus and the EDM electrodes in this two step process.

US-A-5,418,345 discloses an improved method for ensuring correct alignment of the two parts of the hole formed by the different processes by determining a spatial error between the co-ordinate systems of the two process operations. This earlier published document only provides a partial solution to the problem of forming shaped cooling holes in a quicker and more cost effective way by means of laser drilling.

US-A-5,609,779 discloses a laser drilling method for forming shaped diffuser type cooling holes in which the diffuser part of the hole is formed by drilling a series of blind circular holes or slots which do not pass completely through the metal component.
This earlier document is concerned with the problem of forming a diffuser portion without substantial variation in width, depth and surface contour due to the diffuser being formed by a series of blind bores.

US-A-5,683,600 discloses a method of laser drilling diffuser type cooling holes in airfoil sections such as NGV's in a single step operation where a rectangular or square cross-section YAG pulsed laser beam is focused below the exterior surface of the airfoil so that the beam first cuts a generally trapezoidal shaped diffuser section followed by a cylindrical section in a single drilling operation. In this process a hole is produced without moving the laser with respect to the component being drilled. The position of the focal point of the beam, that is to say the amount of de-focus, determines the transition point between the diffuser and cylindrical sections. With this method it is suggested that a single laser drilling operation can be conducted in about 3 seconds compared with 15 plus minutes to form the same hole using conventional EDM techniques. One drawback with this particular method however is that it is only suitable for percussion drilling the whole of the cooling hole in a single drilling operation where the size and shape of the hole being drilled is determined by the cross-section of the beam in the plane normal to the direction of the beam propagation and the degree of beam out of focus, as determined by the depth of the focal point from the exterior surface of the airfoil.

Other laser drilling methods are disclosed in US-A-6,359,254 where the diffuser part of the shaped cooling hole is formed by laser drilling a series of blind bores in the exterior surface of the airfoil, laser drilling a through bore to communicate with the blind bores and finishing the diffuser by milling to provide a smooth surface. US-A-6,362,446 also discloses a two step process where a laser drill is used for drilling at least one rough blind bore within a turbine airfoil and then removing the remaining material by EDM drilling. US6,307,175 describes drilling a rough through hole and then forming the diffuser section. Damage done to the walls of the through hole during formation of the diffuser section is removed by a final cutting step in which the through hole is widened to its final dimension.

According to a first aspect of the invention there is a method of laser trepan drilling diffuser type shaped holes in a workpiece having an internal cavity, the said method comprising the steps of:
laser drilling a hole of substantially constant cross-section through a wall of the workpiece;
directing the beam of the laser such that the beam follows a path on at least one side of the hole to drill a diffuser section on at least the beam entry side of the hole with the beam exiting the hole substantially without interference with the remaining non-diffuser part of the hole, characterised in that the diffuser section is cut with a generally elongate opening on the beam entry side of the hole, with the beam being inclined with respect to the longitudinal axis of the hole, and with respect to the elongate axis of the said opening being formed on the beam entry side of the wall such that the beam is directed substantially wholly into the interior of the hole as it passes therethrough;
the non-diffuser part of the hole comprises a substantially circular cross-section and the diffuser a substantially ovoid cross-section having a pair of semi-circular arcs joined together at their respective ends by a pair of straight parallel sides coincident with opposite sides of the said circular cross-section;
wherein the beam is inclined with respect to the elongate axis of the opening by an angle determined by the steps of: determining the ratio of the length of the periphery of the said opening and half the length dimension of the opening in the direction of the major axis of the ovoid cross-section; determining a first angle with respect to a minor axis of the said ovoid cross-section by dividing 360 degrees by the said ratio to establish a first position on the periphery of the said circular cross-section, and the step of generating a line between the said first position with a second position on the ovoid at the transition from straight line to circular arc in the quadrant of the arc to be drilled, and determining the angle of the generated line with respect to the major axis of the ovoid.

The above method readily enables diffuser type cooling holes to be formed in gas turbine engine components such as NGV and turbine rotor blade airfoils having a hollow interior plenum, plenums, or other cooling passages for conveying cooling air to the exterior surface of the airfoil by means of trepanned diffuser type cooling holes. Typically in such components the diffuser section is formed to a depth of about two thirds of the wall thickness of the component with the remaining third being occupied by the constant cross-section non-diffuser part of the hole. Hitherto it has only been possible to drill certain diffuser hole type geometries by single step laser drilling methods such as those disclosed in US-A-5,683,600 by controlling the beam focus and angle of incidence to form a hole corresponding to the three dimensional shape of the incident and focused beam. The laser trepan drilling method according to the above aspect of the invention readily enables various other geometries to be formed including the so-called "EDM fan" or "plain fan" type of hole which hitherto has only been possible with the aforementioned EDM process. With the trepan drilling method described above the diameter of the laser beam is significantly less than the diameter of the hole being drilled and this readily enables the laser beam to be directed to cut the diffuser section by following a predetermined path to remove the metal from the component without the beam striking the other side of the cooling hole and causing unwanted material removal. A typical beam diameter may be in the region of say 0.2mm for laser drilling a constant cross-section hole having a diameter of 0.6mm, with a diffuser angle in the range of say 25-30⁰ in the flow direction.

The above method readily enables individual diffuser type holes to be drilled in a row of holes having different dimensions, such as hole diameter and diffuser angle. This process capability is of significant benefit to the gas turbine engine designer since the method readily enables the design of individual holes to be optimised without the design constraints of designing a whole row of similar shape and size holes for drilling by EDM electrodes.

It is to be understood that the steps of the above mentioned method may be carried out in any order, that is to say, the through hole may be drilled before or after the diffuser section although in preferred embodiments the through hole will be drilled first to provide a more efficient drilling method.

The diffuser section is cut with a generally elongate opening on the beam entry side of the hole, with the beam being inclined with respect to the longitudinal axis of the cooling hole, and with respect to the elongate axis of the said opening being formed on the beam entry side of the wall such that the beam is directed substantially wholly into the interior of the hole as it passes therethrough. The present inventors have found that for diffuser type cooling holes, in particular "EDM fan" type holes, it is possible to avoid unwanted metal removal by the laser striking the opposite side of the hole when the angled diffuser section is being cut by slightly rotating the laser beam in the plane normal to the longitudinal direction of the hole so that the beam is angled with respect to the elongate axis of the opening being formed, whereby the beam is angled towards the interior of the hole. In the case of an ovoid shaped opening the beam is angled with respect to the straight side of the ovoid as the beam traverses along the straight line thereof.

In one embodiment the cooing hole is in the form of an EDM fan type cooling hole. In this respect, the method readily enables EDM fan type cooling holes to be formed by laser drilling. In this way a hole may be drilled in a matter of a few tens of seconds as opposed to tens of minutes as in the case of EDM drilling.

The non diffuser part of the hole comprises a substantially circular cross-section and the diffuser a substantially ovoid cross-section having a pair of semi circular arcs joined together at their respective ends by a pair of straight parallel sides coincident with the opposite sides of the circular cross-section. Thus, embodiments of the method of the present invention contemplate laser trepan drilling of diffuser type geometries in which the diffuser section is substantially two dimensional, that is in the sense that the cooling hole has a two dimensional substantially oval configuration in the plane normal to the longitudinal axis of the hole, rather than say a three dimensional conical or elliptical configuration. This two-dimensional configuration is commonly found in gas turbine engine components such as NGV's. The invention also contemplates cooling hole geometries in which the diffuser is formed on only one side of the constant cross-section hole.

The said angle is determined by the steps of: determining the ratio of the length of the periphery of the said opening and half the length dimension of the opening in the direction of the major axis of the ovoid cross-section; determining a first angle with respect to a minor axis of the said ovoid cross-section by dividing 360 degrees by the said ratio to establish a first position on the periphery of the said circular cross-section, and the step of generating a line between the said first position with a second position on the ovoid at the transition from straight line to circular arc in the quadrant of the arc to be drilled, and determining the angle of the generated line with respect to the major axis of the ovoid. This provides a reliable method for determining the angle the beam should be inclined with respect to the major axis of the opening to avoid the beam striking other parts of the hole, for example the circular cross-section part of the hole previously formed. For the majority of cooling hole geometries the ratio is in the range of 5-7 such that the first angle lies between 50-70⁰ from the minor axis of the periphery of the opening. By generating a line between the transition point on the opening periphery between the straight and circular arc sections in a particular quadrant to be drilled, with the line passing through a point on the circumference of the circular cross-section hole in the same quadrant, the angle of the line with respect to the major axis determines the angle of the beam with respect to the major axis necessary to avoid unwanted metal removal on the opposite side of the hole, for example, in the circular cross-section part at or near the cooling hole opening on the beam exit side of the cooling hole.

Preferably, the beam is rotated with respect to the said major axis as it moves between respective transition points on the arcs such that in the plane of the opening the beam is aligned with the major axis when at the mid point of the respective arcs. In this way it will be understood that the beam undergoes a transition as it follows the semi circular arc portions of the opening periphery such that the angle of inclination with respect to the major axis is reduced until the beam reaches a mid point on the arc where the beam is coincident with the manor axis and then steadily increases to an equal and opposite inclination on the opposite side of the periphery at the transition between the circular arc and the other straight line section.

The invention will now be more particularly described, by way of example only, with reference to the accompanying drawings; in which
Figure 1 a is a plan view of an "EDM fan" diffuser type cooling hole for a gas turbine engine component;
Figure 1b is a cross-section view of the cooling hole of Figure 1 a along the major axis thereof indicated by the lines I-I in Figure 1a;
Figure 2 is a plan view similar to that of Figure 1 a of a mis-shapen hole formed by a laser drilling process where the beam is not inclined with respect to the major axis of the opening on the beam entry side of the component being drilled;
Figure 3 is a plan view similar to that of Figures 1a and Figure 2 for a typical "EDM style fan" cooling hole identifying various points on the periphery of the opening that are significant in the implementation of the present invention;
Figure 4a is a plan view similar to Figure 1 showing the inclination of a laser beam with respect to the opening on the beam entry side of the hole;
Figure 4b is a cross-section view similar to that of Figure 1a showing the beam passing through the hole;
Figure 5a is a view similar to that of Figure 4a showing the extreme positions of the beam when moving from the transition point at the beginning of one of the semi circular arcs to a mid point along that arc coincident with the major axis of the periphery of the opening; and,
Figure 5b is a cross-section similar to Figure 4b with the laser beam inclined with respect to the longitudinal axis of the hole and coincident with the major axis of the opening.

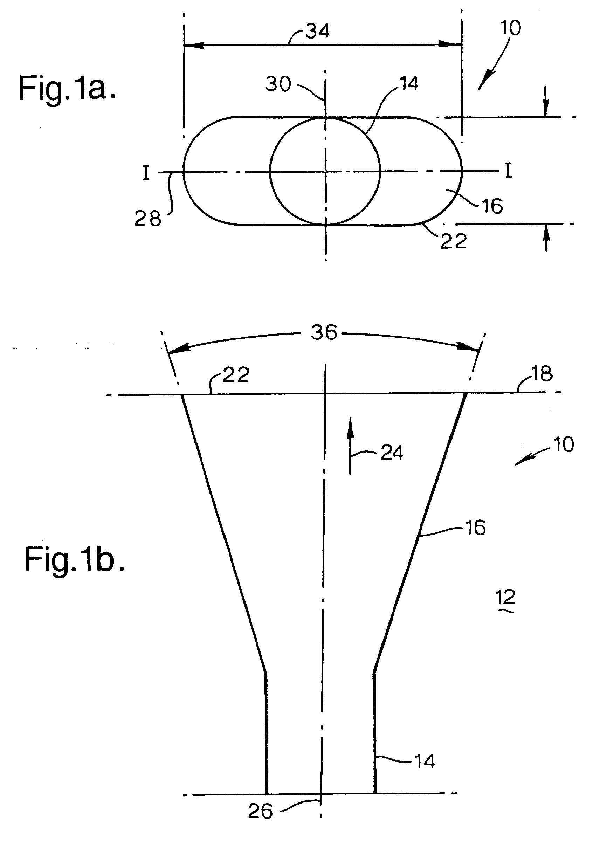

Referring to Figures 1 a and 1 b, a diffuser type shaped cooling hole in the form of an "EDM fan" or "Plain fan" suitable for a gas turbine engine component such as an NGV or the like is indicated at 10. For the purpose of the following description the cooling hole 10 will be described as formed in the airfoil wall section of a hollow NGV having an interior plenum or cooling passage in the interior of the vane. It is to be understood that many similar cooling holes may be provided in one or more rows in an NGV or other gas turbine engine component. Typically such components are manufactured from high temperature Nickel alloys.

In Figures 1a and 1b the cooling hole 10 is formed in the wall 12 of an NGV airfoil by an embodiment of the laser drilling method of the present invention. The cooling hole 10 comprises a circular and substantially constant cross-section metering section 14 and a diffuser section 16 which extends from the cylindrical metering hole part 14 to the exterior surface 18 of the NGV airfoil section. The metering section controls the amount of cooling air entering the hole from the hollow interior 20 of the vane, and the diffuser section 16 reduces the velocity of the cooling air before it passes through the opening 22 on the exterior surface 18 of the airfoil. In the drawing of Figure 1b the direction of the cooling fluid through the hole is indicated by the arrow 24.

As can be seen in Figure 1a, the cooling hole has a generally oval shape cross-section in the plane normal to the longitudinal or flow axis 26 of the hole. In the embodiment shown the oval cross-section is symmetrical about its respective major and minor axes 28 and 30. Typical dimensions for the cooling hole of Figures 1 a and 1 b are 0.76mm diameter with a length of 1.6mm, that is to say the distance between the ends of the elongate cross-section as indicated by the dimension at 34 in the drawing of Figure 1a, and an inclusive diffuser angle of 25 degrees as indicated by the angle 36 in the drawing of Figure 1b.

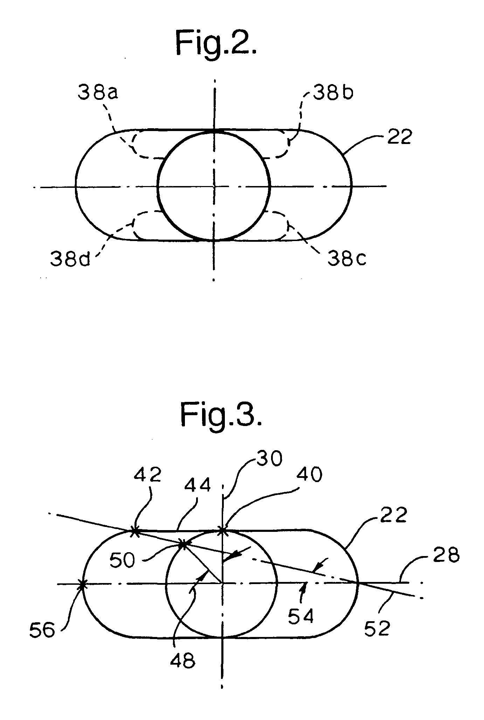

Referring now to Figure 2, previous attempts to laser drill EDM and style cooling holes of the type shown in Figures 1 a and 1 b have lead to mis-shapen holes similar to that shown in Figure 2. The angle of inclination of the laser beam required to form the angled diffuser has in previous methods caused material to be removed from the opposite side of the hole in the region of the beam exit as indicated by the chained lines 38 in the drawing of Figure 2, for example. In order to form a diffuser having an inclusive angle of 25 degrees it is necessary to rotate the laser beam through 12.5 degrees with respect to the longitudinal axis 26 such that when the region of the diffuser in the upper left hand quadrant is formed, as shown in the drawing of Figure 2, the laser beam causes material to be removed as indicated by line 38b on the other side of the hole (upper right hand quadrant) in the region of the constant cross-section metering cylinder section 14. This problem is overcome in embodiments of the present invention by rotating the laser beam away from the edge of the hole being drilled towards the centre of the hole as the beam moves from position 40 to the transition point 42 along the straight edge section 44 of the opening in the quadrant being formed, as indicated in Figure 3.

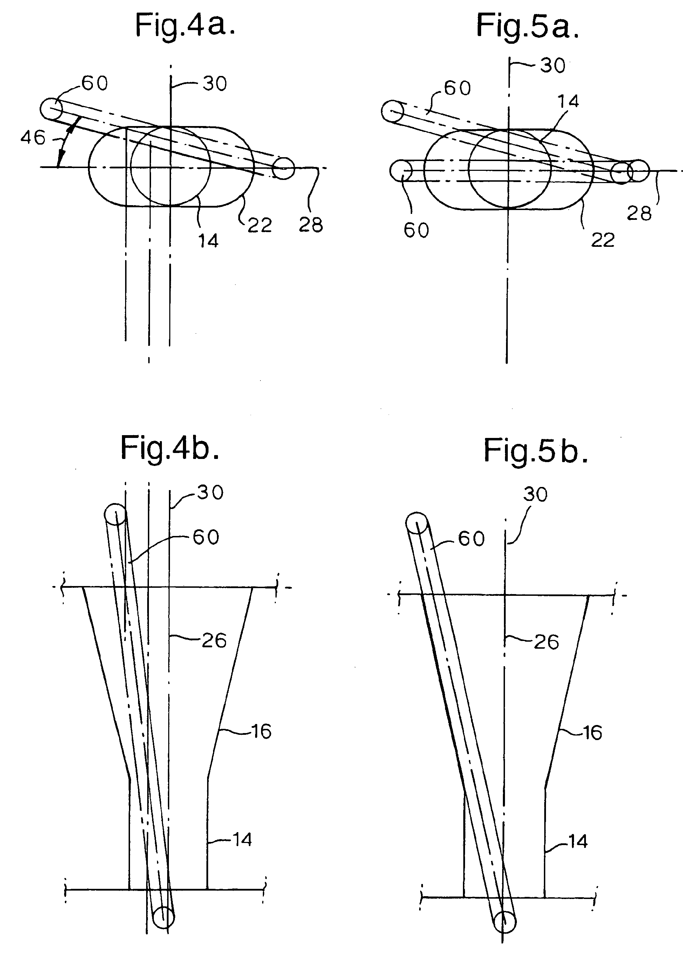

The undercut regions 38 shown in Figure 2 are avoided in embodiments of the invention as shown in Figure 4a and 4b by rotating the laser beam in the plane normal to the longitudinal axis 26 so that the beam is directed away from the circumference of the circular section hole towards its centre so that the beam does not damage the opposite sides of the hole. As can be seen in Figure 4a the beam is rotated so that it forms an angle 46 with respect to the major axis 28 of the oval shaped cross-section opening being formed. The precise value of the angle 46 is determined by a geometrical method which involves the step of calculating the ratio of the length of the periphery of the oval opening and half the length dimension 34 of the opening. This ratio for a typical EDM style fan cooling hole is typically in the range of 5-7. This ratio is then used to calculate a sector angle as indicated at 48 in Figure 3 which is the angle measured from the minor axis 30. The sector angle 48 is determined by dividing a full revolution (360 degrees) by the ratio. For example, if the cooling hole geometry has a ratio of 6 the angle 48 is 60 degrees. The point on the circular cross-section corresponding to this angle, that is to say, point 50 in the drawing shown in Figure 3, defines a first position on a line which passes through a second position 42 at the transition between the straight and curved section of the diffuser opening periphery. A straight line 52 through the points 42 and 50 forms an angle 54 with the major axis 28 of the oval shaped opening and this defines the angle of rotation 46 of the beam with respect to the major axis that is necessary to ensure the beam exits the cooling hole through the circular cross-section on the beam exit side of the wall without striking the surfaces of the hole as in Figure 2.

In the one method of the present invention the beam 60 first trepans the circular cross-section 14 made by following the line of the hole circumference and then trepans the diffuser. The beam traverses along the outline of the diffuser from the point 40 to the transition point 42 with the beam inclined with respect to the axis 26 in accordance with the diffuser angle to be formed, and also with respect to major axis 28 by an amount equal to the angle 54 as determined for the geometry of the particular shaped cooling hole to be drilled. The laser beam traverses along the straight section of the diffuser between the points 40 and 42 and then progressively moves from the position shown in Figure 4a to that shown in Figure 5a where the beam is substantially aligned with the major axis of the oval shaped opening in the plane normal to the flow axis 26. The transition between the points 42 and 56 at the mid point of the semi circular arc is completed by implementing a circular interpolation routine rotating the beam in the plane normal to the longitudinal axis 26. The beam then follows the outline of the oval opening through the remaining quadrants defined by the axes 28 and 30. In one embodiment the laser beam is under the control of a 5 axis (three translational and two rotational axes) numerically controlled laser drilling machine and the laser beam comprises a pulsed YAG laser having a pulse rate of 30Hz.

Although aspects of the invention have been described with reference to the embodiments shown in the accompanying drawings, it is to be understood that the invention is not limited to these precise embodiments. For example the shaped cooling holes produced by the method disclosed herein may be formed in other gas turbine engine components which utilise film cooling, for example combustion chambers and the like. In addition the shaped cooling holes may be formed in other structures where diffuser shaped holes are required and therefore the invention contemplates applications in fields other than the manufacture of gas turbine engine components. The invention also contemplates a method of forming diffuser shaped holes where the diffuser section is formed wholly or substantially wholly on one side of the cross-section of the constant cross-section hole 14. The invention also contemplates embodiments where a diffuser shaped part is formed on both sides of the hole, that is to say on the vane interior side of the hole in addition to exterior side opening on to the airfoil surface. In embodiments of this type the diffuser section on the interior side of the vane may have substantially the same dimensions as the diffuser section on the exterior side as shown in the accompanying drawings, or alternatively the diffuser sections may have different dimensions with the diffuser section on the exterior side of the vane being significantly greater than the diffuser on the interior side thereof.

## Claims

1. A method of laser trepan drilling diffuser type holes (10) in a workpiece having an internal cavity, the said method comprising the steps of:
laser drilling a hole (10) of substantially constant cross-section through a wall (12) of the workpiece;
directing the beam (60) of the laser such that the beam (60) follows a path on at least one side of the hole (10) to drill a diffuser section (16) on at least the beam entry side of the hole with the beam (60) exiting the hole (10) substantially without interference with the remaining non-diffuser part of the hole (14),
**characterised in that** the diffuser section (16) is cut with a generally elongate opening (22) on the beam entry side of the hole (10), with the beam (60) being inclined with respect to the longitudinal axis (26) of the hole, and with respect to the elongate axis (28) of the said opening (22) being formed on the beam entry (18) side of the wall (12) such that the beam (60) is directed substantially wholly into the interior of the hole (10) as it passes therethrough,
the non-diffuser part of the hole (14) comprising a substantially circular cross-section and the diffuser (16) a substantially ovoid cross-section having a pair of semi-circular arcs joined together at their respective ends by a pair of straight parallel sides coincident with opposite sides of the said circular cross-section;
wherein the beam (60) is inclined with respect to the elongate axis (28) of the opening by an angle of rotation (46) determined by the steps of: determining the ratio of the length of the periphery of the said opening (22) and half the length dimension of the opening in the direction of the major axis (28) of the ovoid cross-section; determining a first angle (48) with respect to a minor axis (30) of the said ovoid cross-section by dividing 360 degrees by the said ratio to establish a first position (50) on the periphery of the said circular cross-section, and the step of generating a line between the said first position (50) with a second position (42) on the ovoid at the transition from straight line to circular arc in the quadrant of the arc to be drilled, and determining the angle of rotation (46) as the angle (54) of the generated line with respect to the major axis (28) of the ovoid.

2. A method as claimed in any preceding claim wherein the said hole (10) is in the form of an EDM fan type cooling hole in a gas turbine engine component.

3. A method as claimed in Claim 1 or claim 2 wherein the beam (60) is rotated with respect to the said major axis (28) as it moves between respective transition points on the arcs such that in the plane of the opening the beam (60) is aligned with the major axis (28) when at the mid point of the respective arcs.

4. A method as claimed in any preceding claim wherein the diffuser angle is between 20-30°, preferably 25-29°.

5. A method as claimed in any preceding claim wherein the ratio of the length of the diffuser section (16) to the non-diffuser section (14) is approximately in the region of about 2:1.

6. A method as claimed in any preceding claim further comprising the step of directing the said beam (60) to cut a further diffuser section (16) on the beam exit side of the hole (10).

7. A method as claimed in any preceding claim wherein the said workpiece is a gas turbine engine component.

8. A method as claimed in Claim 7 wherein the said component comprises an NGV.

9. A method as claimed in any preceding claim for producing a gas turbine engine component.

## Patentansprüche

1. Verfahren zum Lasertrepanbohren von diffusorartigen Bohrungen (10) in einem Werkstück, das einen inneren Hohlraum aufweist, wobei das Verfahren die folgenden Schritte umfasst:
Laserbohren einer Bohrung (10) mit einem im Wesentlichen konstanten Querschnitt durch eine Wand (12) des Werkstücks;
Führen des Strahls (60) des Lasers, sodass der Strahl (60) auf mindestens einer Seite der Bohrung (10) einem Pfad folgt, um mindestens auf der Strahleingangsseite der Bohrung einen Diffusorabschnitt (16) zu bohren, wobei der Strahl (60) die Bohrung (10) im Wesentlichen ohne Interferenz mit dem verbleibenden nicht diffusorartigen Teil der Bohrung (14) verlässt,
dadurch charakterisiert, dass der Diffusorabschnitt (16) mit einer allgemein länglichen Öffnung (22) auf der Strahleingangsseite der Bohrung (10) geschnitten wird, wobei der Strahl (60) in Bezug auf die Längsachse (26) der Bohrung und in Bezug auf die längliche Achse (28) der Öffnung (22) geneigt ist, die auf der Seite der Wand (12) des Strahleneingangs (18) geformt wird, sodass der Strahl (60) im Wesentlichen gänzlich in das Innere der Bohrung (10) geführt wird, während er dort hindurch verläuft,
wobei der nicht diffusorartige Teil der Bohrung (14) einen im Wesentlichen kreisförmigen Querschnitt und der Diffusor (16) einen im Wesentlichen ovoiden Querschnitt umfasst, der ein Paar halbkreisförmiger Bögen aufweist, die an ihren jeweiligen Enden durch ein Paar gerader paralleler Seiten verbunden sind und mit gegenüberliegenden Seiten des kreisförmigen Querschnitts deckungsgleich sind;
wobei der Strahl (60) in Bezug auf die längliche Achse (28) der Öffnung in einem Drehwinkel (46) geneigt ist, der durch die Folgenden Schritte bestimmt wird: Bestimmen des Verhältnisses der Länge des Umfangs der Öffnung (22) und der Hälfte des Längenmaßes der Öffnung in Richtung der Hauptachse (28) des ovoiden Querschnitts; Bestimmen eines ersten Winkels (48) in Bezug auf eine Nebenachse (30) des ovoiden Querschnitts, indem 360 Grad durch das Verhältnis geteilt werden, um eine erste Position (50) auf dem Umfang des kreisförmigen Querschnitts zu ermitteln und den Schritt des Erzeugens einer Linie zwischen der ersten Position (50) und einer zweiten Position (42) auf dem Ovoid am Übergang von der geraden Linie zum kreisförmigen Bogen im Quadranten des zu bohrenden Bogens und Bestimmen des Drehwinkels (46) als Winkel (54) der erzeugten Linie in Bezug auf die Hauptachse (28) des Ovoids.

2. Verfahren nach einem beliebigen der vorhergehenden Ansprüche, wobei die Bohrung (10) die Form einer Kühlbohrung eines Lüfters für das Funkenerodieren in einem Bauelement eines Gasturbinenmotors aufweist.

3. Verfahren nach Anspruch 1 oder Anspruch 2, wobei der Strahl (60) in Bezug auf die Hauptachse (28) gedreht wird, während er sich zwischen jeweiligen Übergangspunkten auf den Bögen bewegt, sodass der Strahl (60) auf der Ebene der Öffnung mit der Hauptachse (28) ausgerichtet ist, wenn er sich am Mittelpunkt der jeweiligen Bögen befindet.

4. Verfahren nach einem beliebigen der vorhergehenden Ansprüche, wobei der Diffusorwinkel zwischen 20-30°, vorzugsweise 25-29° liegt.

5. Verfahren nach einem beliebigen der vorhergehenden Ansprüche, wobei das Verhältnis der Länge des Diffusorabschnitts (16) zum nicht diffusorartigen Abschnitt (14) annähernd in dem Bereich von ungefähr 2:1 liegt.

6. Verfahren nach einem beliebigen der vorhergehenden Ansprüche, das zusätzlich den Schritt des Führens des Strahls (60) umfasst, um einen weiteren Diffusorabschnitt (16) auf der Strahlenausgangsseite der Bohrung (10) zu schneiden.

7. Verfahren nach einem beliebigen der vorhergehenden Ansprüche, wobei das Werkstück ein Bauelement eines Gasturbinenmotors ist.

8. Verfahren nach Anspruch 7, wobei das Bauelement eine Turbinenleitschaufel umfasst.

9. Verfahren nach einem beliebigen der vorhergehenden Ansprüche für die Herstellung eines Bauelements eines Gasturbinenmotors.

## Revendications

1. Une méthode de perçage par trépanage au laser de trous du type à diffuseur (10) dans une pièce à usiner présentant une cavité interne, ladite méthode comprenant les opérations suivantes :
perçage au laser d'un trou (10) à section substantiellement constante dans une paroi (12) de la pièce à usiner ;
pointage du faisceau (60) du laser de sorte que le faisceau (60) suive un chemin sur au moins un côté du trou (10) pour percer une section de diffuseur (16) sur au moins le côté d'entrée du trou avec le faisceau (60) sortant du trou (10), sans perturber dans l'ensemble la partie restante de non diffuseur du trou (14),
**caractérisée par le fait que** la section de diffuseur (16) est découpée avec une ouverture généralement allongée (22) sur le côté d'entrée du faisceau du trou (10), le faisceau (60) étant incliné relativement à l'axe longitudinal (26) du trou, et relativement à l'axe allongé (28) de ladite ouverture (22) ainsi formée sur le côté (18) d'entrée du faisceau de la paroi (12) de sorte que le faisceau (60) soit dirigé dans une grande mesure entièrement dans l'intérieur du trou (10) lorsqu'il traverse celui-ci,
la partie de non diffuseur du trou (14) comprenant un section transversale substantiellement circulaire, et le diffuseur (16) une section substantiellement ovoïde, avec une paire d'arcs semi-circulaires joints ensemble à leurs extrémités respectives par une paire de côtés parallèles droits coïncidant avec des côtés opposés de ladite section transversale circulaire ;
le faisceau (60) étant incliné relativement à l'axe allongé (28) de l'ouverture par un angle de rotation (46) déterminé par les étapes suivantes : détermination du ratio de la longueur du pourtour de ladite ouverture (22) sur la moitié de la longueur de l'ouverture dans le sens de l'axe principal (28) de la section transversale ovoïde ; détermination d'un premier angle (48) relativement à un axe secondaire (30) de ladite section transversale ovoïde, en divisant 360 degrés par ledit ratio afin d'établir une première position (50) sur le pourtour de ladite section transversale circulaire, et l'opération de production d'une ligne entre ladite première position (50) et une deuxième position (42) sur l'ovoïde au point de transition d'une ligne droite à un arc circulaire dans le quadrant de l'arc à percer ; et détermination de l'angle de rotation (46) comme angle (54) de la ligne produite relativement à l'axe principal (28) de l'ovoïde.

2. Une méthode selon une quelconque des revendications précédentes, ledit trou (10) se présentant sous forme d'un trou de refroidissement autonome d'étincelage dans un composant pour moteur à turbine à gaz.

3. Une méthode selon la revendication 1 ou la revendication 2, dans laquelle le faisceau (60) tourne relativement audit axe principal (28) lors de son déplacement entre des points de transition correspondants sur les arcs, de sorte que dans le plan de l'ouverture, le faisceau (60) soit aligné avec l'axe principal (28) lorsqu'il se trouve au point intermédiaire des arcs respectifs.

4. Une méthode selon une quelconque des revendications précédentes, dans laquelle l'angle de diffuseur est compris entre 20° et 30°, et, de préférence, entre 25° et 29°.

5. Une méthode selon une quelconque des revendications précédentes, dans laquelle le ratio de la longueur sur la section du diffuseur (16) sur la section du non-diffuseur (14) est égal à environ 2/1.

6. Une méthode selon une quelconque des revendications précédentes, comprenant en outre l'opération de la direction dudit faisceau (60) pour découper une autre section du diffuseur (16) sur le côté de sortie du faisceau du trou (10).

7. Une méthode selon une quelconque des revendications précédentes, dans laquelle ladite pièce à usiner est un composant pour moteur à turbine à gaz.

8. Une méthode selon la revendication 7, dans laquelle ledit composant comprend une aube distributeur turbine.

9. Une méthode selon une quelconque des revendications précédentes pour la production d'un composant pour moteur à turbine à gaz.
